# EUROPEAN PATENT SPECIFICATION

(11) **EP 2 667 108 B1**
(45) Date of publication and mention of the grant of the patent: **08.01.2020**
(21) Application number: 12736385.1
(22) Date of filing: 18.01.2012
(51) Int. Cl.: F24F 5/00, F25B 5/02

(54) **AIR CONDITIONER**
KLIMAANLAGE
CLIMATISEUR

(30) Priority: 19.01.2011 JP 2011009265
(43) Date of publication of application: 27.11.2013
(73) Proprietor: DAIKIN INDUSTRIES, LTD., Osaka-Shi, Osaka 530-8323 (JP)
(72) Inventor: FUJIOKA, Yuuki, Osaka-Shi, Osaka 530-8323 (JP); KIZAWA, Toshihiro, Osaka-Shi, Osaka 530-8323 (JP)
(74) Representative: Hoffmann Eitle
(86) International application number: PCT/JP2012/050898
(87) International publication number: WO 2012/099141

(56) References cited:
- WO-A1-2010/106771
- JP-A- 7 055 234
- JP-A- H0 448 140
- JP-A- 2000 292 020
- JP-A- 2002 098 387
- JP-A- 2003 322 388
- JP-A- 2006 038 379
- JP-A- 2006 097 972
- JP-A- 2010 216 767

## Description

### Technical Field

The present invention relates to an air conditioner including an indoor heat exchanger, a fan, and a radiation heat exchanger.

### Background Art

As an indoor unit of an air conditioner, there has been one including an indoor fan, an indoor heat exchanger disposed to oppose to the indoor fan, and a radiation panel (radiation heat exchanger) arranged on the surface of the indoor unit.
For example, in an air conditioner described in PTL 1, a radiation panel and an indoor heat exchanger are serially connected. To perform both the warm-air heating and the radiation heating, the high-temperature, high-pressure refrigerant discharged from the compressor provided in the outdoor unit is supplied to the radiation heat exchanger, and then to the indoor heat exchanger. In this air conditioner, the operational frequency of the compressor is controlled based on the indoor temperature, when both of the warm-air heating and the radiation heating are performed.

Further, WO 2010/106771 A1 discloses an air conditioner configured in such a manner that chattering does not occur during heating operation even if a refrigerant liquefied by a radiation heat exchanger stays in the radiation heat exchanger and in the vicinity of an on-off valve. An air conditioner is provided with a first check valve located between a radiation heat exchanger and an on-off valve. When the on-off valve is in a closed state, the amount of a liquid refrigerant present between the on-off valve and the first check valve is small, and, therefore, even if the liquid refrigerant evaporates naturally to increase the internal pressure, chattering is prevented from occurring because the pressure does not reach a level which is sufficient to open the on-off valve.

JP H04 481140 A discloses an air conditioner, wherein at the time of starting operation, there is a substantial difference between an indoor air temperature and a set indoor air temperature, so that refrigerant discharged from a compressor is flowed from a four-way valve, a two-way valve, an indoor heat exchanger, an expansion valve and an outdoor heat exchanger in this order and then a powerful hot air heating only with radiation of the indoor heat exchanger is carried out. As the indoor temperature is increased and the difference between it and the set indoor air temperature is reduced, a part of the refrigerant passed through the four-way valve passes through the two-way valve, radiation heat exchanger and an expansion valve, merged with a flow of refrigerant flowing to the outdoor heat exchanger and thus hot air heating and radiation heating are concurrently carried out. As the indoor air temperature approaches the set indoor air temperature, the refrigerant flows in the series circuit of the radiation heat exchanger and the indoor heat exchanger and then the hot air heating and the radiation heating are concurrently carried out. As the indoor air temperature reaches or exceeds the set indoor air temperature, only the radiation heating is carried out.

JP 2006 038379 A discloses a cold and hot water control method of a cold and hot heat source machine, wherein energy of a cold and hot water pump such as an air conditioner, is saved. The cold and hot water control method of the cold and hot heat source machine comprises the cold and hot water pump capable of performing the inverter control for circulating the cold and hot water from the cold and hot heat source machine in a cold and hot water piping system, a plurality of secondary facilities connected to the cold and hot water piping system, a flow regulating valve for regulating the cold and hot water flow rate to each secondary facility, and a bypass pipe for bypassing the secondary facilities and returning the cold and hot water from the outlet side of the cold and hot heat source machine. The valve opening of the flow regulating valve of each secondary facility is detected, and the water supply pressure of the cold and hot water pump is decreased by inverter control so that the valve opening of the flow regulating valve having the largest valve opening is substantially full open. The cold and hot water outlet temperature of the cold and hot heat source machine is controlled so that the system COP becomes maximum.

JP 2003 322388 A discloses an air conditioner, wherein a branch unit is connected between the connections of an outdoor unit and an indoor unit, and a floor panel is connected to the branch unit.

### Citation List

### Patent Literature

[PTL 1] Japanese Unexamined Patent Publication No. 113239/1988 (Tokukaishou 63-113239)

### Summary of Invention

### Technical Problem

In an air conditioner that performs both the warm-air heating and the radiation heating, for example, an operation may be continued for a long time with a high frequency of the compressor. In such a case, continuation of the state where the blow-out temperature is high causes warm wind having been blown out to accumulate nearby the ceiling, thus causing an increase in the difference between the temperature nearby the ceiling and that nearby the floor surface.

If the frequency of the compressor is lowered to lower the blow-out temperature for the purpose of cancelling the difference in the temperatures, the frequency of the compressor having been lowered may cause a drop in the temperature of the radiation panel.

In view of the above problems, an obj ect of the present invention is to provide an air conditioner with improved comfort.

### Solutions to the Problem

An air conditioner according to the present invention is defined by claim 1. Dependent claims relate to preferred embodiments.

The air conditioner according to the present invention in which the blow-out temperature is decreased by decreasing the frequency of the compressor, allows reduction of the temperature difference between the temperatures in the areas nearby the ceiling and the floor surface of the room is reduced. Further, increasing the opening degree of the valve structure after the frequency of the compressor is decreased restrains a decrease in the temperature of the radiation heat exchanger. This improves the comfort.

According to some preferred embodiments, the valve structure is provided between the radiation heat exchanger and the merging section in the second channel.

These embodiments allow adjustment of the flow rate of the refrigerant flowing in the radiation heat exchanger and in the indoor heat exchanger, by controlling the valve structure.

According to some preferred embodiments, the air conditioner is configured to control the frequency of the compressor based on a temperature difference between an indoor target temperature and an indoor temperature.

In these embodiments, the frequency of the compressor is controlled based on the indoor temperature. Therefore, it is possible to decrease the frequency of the compressor when the temperature difference between the temperatures in the areas nearby the ceiling and the floor surface of the room is large. Note that the "temperature difference between the indoor target temperature and the indoor temperature" is a value resulting from subtraction of the indoor temperature from the indoor target temperature, and takes a negative value when the indoor temperature is higher than the indoor target temperature.

According to some preferred embodiments, the air conditioner is configured to control the opening degree of the valve structure based on a temperature of the radiation heat exchanger.

When the frequency of the compressor and the temperature of the radiation heat exchanger are decreased, these embodiments reliably restrain a decrease in the temperature of the radiation heat exchanger by increasing the opening degree of the valve structure.

According to some preferred embodiments, the air conditioner is configured to control the opening degree of the valve structure based on a temperature of the indoor heat exchanger.

When the frequency of the compressor and the temperature of the indoor heat exchanger are decreased, these embodiments restrain a decrease in the temperature of the radiation heat exchanger by increasing the opening degree of the valve structure.

According to some preferred embodiments, the outlet is provided at an upper end portion of the casing.

This embodiment of the air conditioner blows out warm wind from the upper end portion of its casing. Therefore, the warm air is easily accumulated nearby the ceiling of the room, causing a temperature difference between temperatures in the areas nearby the ceiling and the floor surface of the room. Therefore, the structure of the present invention is especially effective.

### Advantageous Effects

As hereinabove described, the present invention brings about the following effects.

In the air conditioner according to the present invention, the blow-out temperature is decreased by decreasing the frequency of the compressor, allows reduction of the temperature difference between the temperatures in the areas nearby the ceiling and the floor surface of the room is reduced. Further, increasing the opening degree of the valve structure after the frequency of the compressor is decreased restrains a decrease in the temperature of the radiation heat exchanger. This improves the comfort.

The structure of some preferred embodiments allows adjustment of the flow rate of the refrigerant flowing in the radiation heat exchanger and in the indoor heat exchanger, by controlling the valve structure.

In the structure of some preferred embodiments, the frequency of the compressor is controlled based on the indoor temperature. Therefore, it is possible to decrease the frequency of the compressor when the temperature difference between the temperatures in the areas nearby the ceiling and the floor surface of the room is large.

When the frequency of the compressor and the temperature of the radiation heat exchanger are decreased, the structure of some preferred embodiments reliably restrains a decrease in the temperature of the radiation heat exchanger by increasing the opening degree of the valve structure.

When the frequency of the compressor and the temperature of the indoor heat exchanger are decreased, the structure of some preferred emobodiments restrains a decrease in the temperature of the radiation heat exchanger by increasing the opening degree of the valve structure.

The structure of some preferred embodiments blows out warm wind from the upper end portion of its casing. Therefore, the warm air is easily accumulated nearby the ceiling of the room, causing a temperature difference between temperatures in the areas nearby the ceiling and the floor surface of the room. Therefore, the structure of the present invention is especially effective.

### Brief Description of Drawings

[FIG. 1] FIG. 1 is a circuit diagram showing a schematic configuration of an air conditioner related to an embodiment of the present invention, and shows a flow of a refrigerant during a cooling operation and during a warm-air heating operation.
[FIG. 2] FIG. 2 is a circuit diagram showing a schematic configuration showing the air conditioner related to the embodiment of the present invention, and shows a flow of the refrigerant during the radiation heating operation.
[FIG. 3] FIG. 3 is a block diagram showing a schematic configuration of a controller for controlling the air conditioner.
[FIG. 4] FIG. 4 is a perspective view of an indoor unit.
[FIG. 5] FIG. 5 is a cross sectional view taken along the line V-V in FIG. 4.
[FIG. 6] FIG. 6(a) is a diagram for explaining a control of a compressor during the warm-air heating operation, FIG. 6 (b) is a diagram for explaining a control of the compressor during the warm-air heating operation.
[FIG. 7] FIG. 7 is a graph showing variation in the frequency of the compressor in cases where the indoor temperature increases during the radiation heating operation, and shows an example where the compressor is controlled as shown in FIG. 6(b), and an example where the compressor is controlled as shown in FIG. 6(a).
[FIG. 8] FIG. 8 is a graph showing variation in the frequency of the compressor when the indoor temperature drops during the radiation heating operation, and shows an example where an example where the compressor is controlled as shown in FIG. 6(b), and an example where the compressor is controlled as shown in FIG. 6(a).
[FIG. 9] FIG. 9 is a graph showing operations of each unit of the air conditioner during an operation under a first radiation operation mode, and showing the indoor temperature and the radiation heat exchanger temperature.
[FIG. 10] FIG. 10 is a graph showing operations of each unit of the air conditioner during an operation under second radiation operation mode, and showing the indoor temperature and the radiation heat exchanger temperature.
[FIG. 11] FIG. 11 is a graph showing variation in the frequency of the compressor when the indoor temperature drops during the radiation heating operation, and shows an example where the compressor is controlled as shown in FIG. 6(b) and an example where the compressor is controlled as shown in FIG. 6(a).

### Description of Embodiments

The following describes an air conditioner 1 related to an embodiment of the present invention.

### <Overall Structure of Air Conditioner 1>

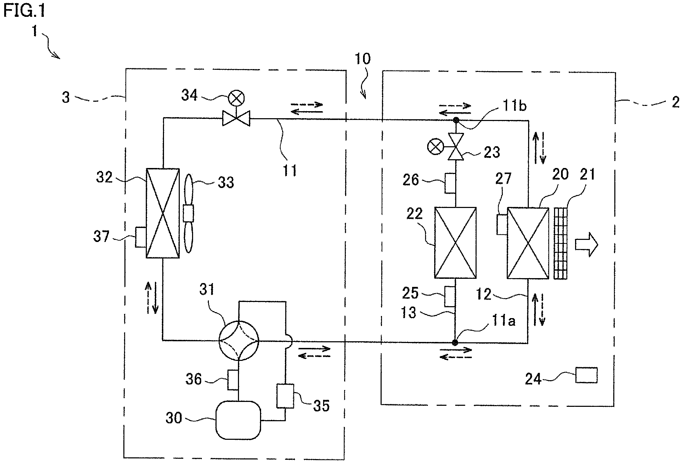

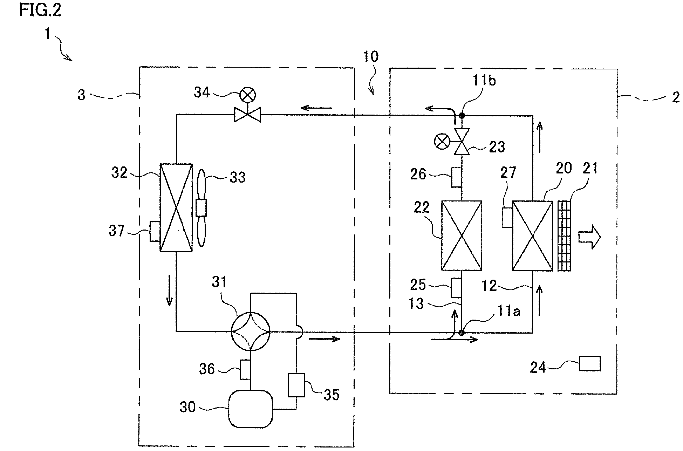

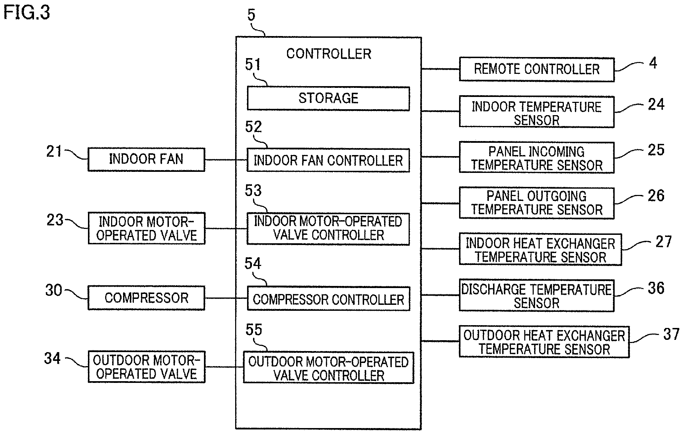

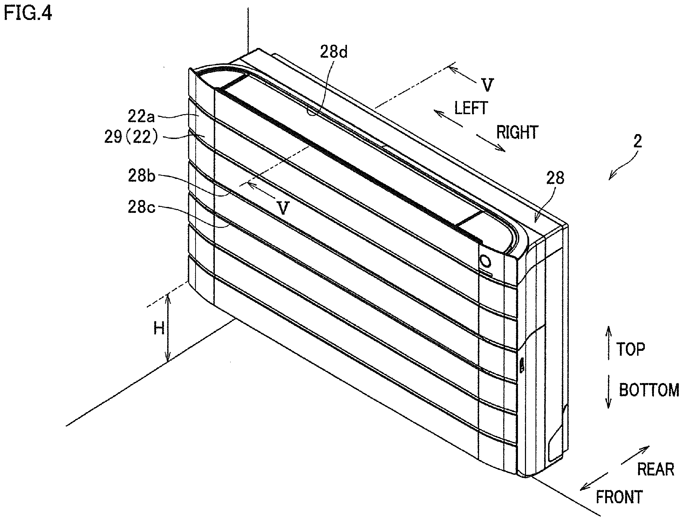

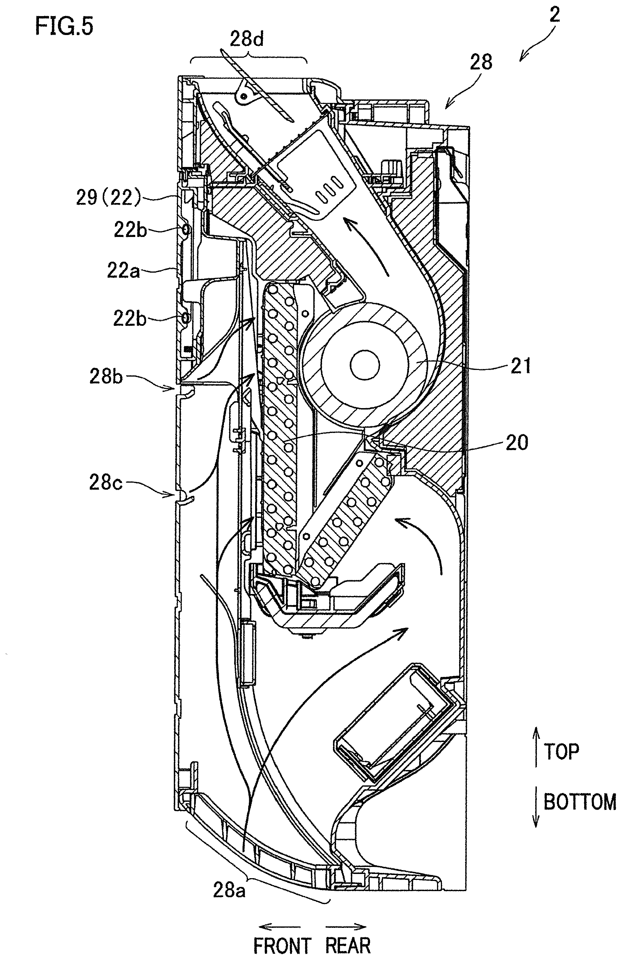

As shown in FIG. 1 and FIG. 2, an air conditioner 1 of the embodiment includes: an indoor unit 2 installed inside a room, an outdoor unit 3 installed outside the room, and a remote controller 4 (see FIG. 3). The indoor unit 2 has an indoor heat exchanger 20, an indoor fan 21 disposed nearby the indoor heat exchanger 20, a radiation heat exchanger 22 provided to a radiation panel 29 (see FIG. 4 and FIG. 5), an indoor motor-operated valve (valve structure) 23, and an indoor temperature sensor 24 for detecting the indoor temperature. Further, the outdoor unit 3 has a compressor 30, a four-way valve 31, an outdoor heat exchanger 32, an outdoor fan 33 disposed nearby the outdoor heat exchanger 32, and an outdoor motor-operated valve (decompression structure) 34. The indoor unit 2 and the outdoor unit 3 are connected to each other via an annular refrigerant circuit 10. The refrigerant circuit 10 includes a principal channel 11, a first channel 12, and a second channel 13.

In the principal channel 11 are provided the outdoor motor-operated valve 34, the outdoor heat exchanger 32, and the compressor 30 in this order. The principal channel 11 further includes the four-way valve 31, and by switching this four-way valve 31, one of the discharge side and the intake side of the compressor 30 is connected to the outdoor heat exchanger 32. Between the intake side of the compressor 30 and the four-way valve 31 in the principal channel 11, there is an accumulator 35. Between the discharge side of the compressor 30 and the four-way valve 31 in the principal channel 11, there is a discharge temperature sensor 36. To the outdoor heat exchanger 32 is provided an outdoor heat exchanger temperature sensor 37. The outdoor motor-operated valve 34 functions as a decompression structure, and its opening degree is variable. Further, in cases where the intake side of the compressor 30 is connected to the outdoor heat exchanger 32 (heating operation shown in FIG. 2), there is a branching section 11a on the downstream side of the compressor 30 in the principal channel 11, and a merging section 11b on the upstream side of the outdoor motor-operated valve 34.

The first channel 12 and the second channel 13 are provided between the branching section 11a and the merging section 11b, and are connected in parallel. The first channel 12 is provided with the indoor heat exchanger 20, and the second channel 13 is sequentially provided with a radiation heat exchanger 22 and the indoor motor-operated valve 23 from the side of the branching section 11a. In the refrigerant circuit 10 of the embodiment, the channel between the branching section 11a and the merging section 11b, i.e., channel excluding the first channel 12 and the second channel 13, is a principal channel.

As shown in FIG. 4, the indoor unit 2 of the embodiment has a rectangular solid shape, and is installed to a wall surface, while being slightly above the floor surface of the room. In the embodiment, the distance H (see FIG. 4) of the indoor unit 2 from the floor surface is approximately 10 cm. As shown in FIG. 5, the indoor unit 2 has a casing 28 which accommodates the indoor fan 21 and the indoor heat exchanger 20 or the like. A part of the front surface of the casing 28 is structured by the radiation panel 29. On the lower wall of the casing 28 is formed a principal inlet 28a. On the front wall of the casing 28 are formed auxiliary inlets 28b and 28c. On the upper wall of the casing 28 is formed an outlet 28d.

As shown in FIG. 5, the indoor heat exchanger 20 is provided inside the indoor unit 2 so as to oppose to the indoor fan 21, and is disposed on a windward side of the indoor fan 21. This indoor unit 2, when the indoor fan 21 is driven, draws in the air in the vicinity of the floor surface through the principal inlet 28a and also draws in the air from the auxiliary inlets 28b and 28c. The air having been drawn in is heated or cooled in the indoor heat exchanger 22, and then blown into the room from the outlet 28d formed on the upper wall of the casing 28, thus performing cooling or warm-air heating. Further, as shown in FIG. 1 and FIG. 2, the indoor heat exchanger 20 is provided with an indoor heat exchanger temperature sensor 27.

The radiation panel 29 is arranged on a surface of the indoor unit 2. The radiation panel 29 includes: a radiation plate 22a which constitutes a part of the surface of the indoor unit 2, a U-shaped pipe fitting 22b fixed to the back surface side of the radiation plate 22a, through which the refrigerant flows; and a connection pipe fitting (not-shown) configured to supply the refrigerant to the pipe fitting 22b. Note that the radiation heat exchanger 22 is structured by the radiation plate 22a and the pipe fitting 22b. The indoor unit 2 performs radiation heating by causing the heat of the refrigerant flowing in the pipe fitting 22b to radiate in the room through the radiation plate 22a. As shown in FIG. 1 and FIG. 2, on both ends of the radiation heat exchanger 22 in the second channel 13, a panel incoming temperature sensor 25 and the panel outgoing temperature sensor 26 are provided, respectively.

The indoor motor-operated valve 23 is provided for adjusting the flow rate of the refrigerant to be supplied to the radiation heat exchanger 22. The indoor motor-operated valve 23 is provided on the downstream side of the radiation heat exchanger 22, relative to the flow direction of the refrigerant during a radiation heating operation and a radiation breeze-heating operation which are described hereinafter.

The air conditioner 1 of the embodiment is capable of performing a cooling operation, a warm-air heating operation, and a radiation heating operation. The cooling operation is an operation to perform cooling by causing the refrigerant to flow not in the radiation heat exchanger 22, but in the indoor heat exchanger 20. The warm-air heating operation is an operation to perform warm-air heating by causing the refrigerant to flow not in the radiation heat exchanger 22, but in the indoor heat exchanger 20. The radiation heating operation is an operation to perform radiation heating by causing the refrigerant to flow in the indoor heat exchanger 20 to perform the warm-air heating while causing the refrigerant to also flow in the radiation heat exchanger 22 to perform radiation heating.

The remote controller 4 allows the user to start/stop the operation, set an operation mode, set a target indoor temperature (indoor target temperature), set a blowing air quantity. As shown in Table 1, the air conditioner 1 of the embodiment allows selecting of the cooling operation mode or the heating operation mode as the main operation mode, by operating the remote controller 4. Selecting the heating operation mode as the main operation mode further enables selecting of a warm-air heating operation mode, or one of a first radiation operation mode and a second radiation operation mode in the radiation heating operation modes, as shown in Table 1.

**[Table 1]**

| Cooling operation mode | | | Cooling operation |
|---|---|---|---|
| Heating operation mode | Warm-air heating operation mode | | Warm-air heating operation |
| | Radiation heating operation mode | First radiation operation mode | Radiation heating operation (Blowing air quantity varied according to indoor temperature) |
| | | Second radiation operation mode | Radiation heating operation (Fixed small blowing air quantity) |

As shown in Table 1, the cooling operation mode is a mode for performing the cooling operation. The warm-air heating operation mode is a mode for performing the warm-air heating operation. The first radiation operation mode is a mode for performing radiation heating operation such that the blowing air quantity is varied according to the indoor temperature. The second radiation operation mode is a mode for performing the radiation heating operation such that the blowing air quantity is lower than that of the warm-air heating operation but is constant. The air volume is automatically controlled when the first radiation operation mode or the second radiation operation mode is selected. When the warm-air heating operation mode or the cooling operation mode is selected, setting of the air volume is selectable from "Air Volume-Auto", "Strong", and "Weak" by operating the remote controller 4.

### <Controller 5>

Next, the following describes a controller 5 which controls the air conditioner 1, with reference to FIG. 3.

As shown in FIG. 3, the controller 5 has a storage 51, an indoor fan controller 52, an indoor motor-operated valve controller 53, a compressor controller 54, and an outdoor motor-operated valve controller 55. The controller 5, during the heating operation, automatically stops operation (thermo-off state) when the indoor temperature is higher than the indoor target temperature by a predetermined degree(s) (in the embodiment, when the difference ΔT_{R} between the indoor target temperature and the indoor temperature is -2.0 or smaller). Then, when the room temperature drops and becomes lower than the indoor target temperature by a predetermined degrees (in the embodiment, when the difference ΔT_{R} between the indoor target temperature and the indoor temperature is -2.0°C or greater), the controller 5 resumes the operation (thermo-on state) . Note that the difference ΔT_{R} in the temperatures is a value resulting by subtracting the indoor temperature from the indoor target temperature. As such, when the indoor temperature is higher than the indoor target temperature, the value becomes a negative value. Note that the indoor temperature to become the thermo-off state and the indoor temperature to become the thermo-on state are not limited to those described above.

### (Storage 51)

The storage 51 stores therein various operational settings related to the air conditioner 1, a control program, and a data table necessary for executing the control program. The operational settings include those set by a user operating the remote controller 4 such as the target indoor temperature, and those which are set in advance in the air conditioner 1. In the air conditioner 1 of the embodiment, the target temperature range of the radiation heat exchanger 22 is set to a predetermined temperature range (e.g. , 50 to 55°C) . Note that the target temperature range of the radiation heat exchanger 22 may be settable by operation of the remote controller 4.

### (Indoor Fan Controller 52)

The indoor fan controller 52 controls the rotational frequency of the indoor fan 21.

Table 2 shows fan taps selectable during the warm-air heating operation mode with the auto air volume setting, the first radiation operation mode, and the second radiation operation mode, and rotational frequencies corresponding to the fan taps, respectively.

**[Table 2]**

| | | Fan tap | rotational frequency |
|---|---|---|---|
| Warm-air heating operation mode (Auto blowing air quantity) | | A1 | a1 |
| | | A2 | a2 |
| | | A3 | a3 |
| | | A4 | a4 |
| | | A5 | a5 |
| First radiation operation mode | First air volume control | B1 | b1 |
| | | B2 | b2 |
| | | B3 | b3 |
| | | B4 | b4 |
| | | B5 | b5 |
| | | B6 | b6 |
| | | B7 | b7 |
| | Second air volume control | C1 | c1 |
| Second radiation operation mode | | C1 | c1 |

| | | | |
|---|---|---|---|
| * c1 < a5 < a4 < a3 < a2 < a1 * c1 < b7 < b6 < b5 < b4 < b3 < b2 < b1 | | | |

During the warm-air heating operation with the auto air volume setting, the indoor fan controller 52 selects any of the five stages of fan taps A1 to A5 shown in Table 2, based on the difference ΔT_{R} between the indoor target temperature and the indoor temperature, and controls the indoor fan 21 so that the rotational frequency of the indoor fan 21 is any of the rotational frequencies (a1 to a5) corresponding to the fan tap. Further, when any of the air volumes from the "Strong" to "Weak" is selected during the warm-air heating operation, the indoor fan controller 52 controls the indoor fan 21 so as to make its rotational frequency to a constant rotational frequency set in advance.

Further, during the second radiation operation mode, the indoor fan controller 52 controls the indoor fan 21 so that its rotational frequency is a constant rotational frequency c1 which is lower than the rotational frequencies a1 to a5 during the warm-air heating operation. The rotational frequency c1 is a value such that the rotation of the indoor fan 21 at the frequency generates almost no sound and a user feels almost no draft.

Further, when an operation to start the first radiation operation mode is conducted, the indoor fan controller 52 starts a first air volume control, when the temperature difference ΔT_{R} between the indoor target temperature and the indoor temperature is greater than the 0°C. When the temperature difference ΔT_{R} is 0°C or lower, the indoor fan controller 52 starts a second air volume control.

The second air volume control is the same as the control performed during the second radiation operation mode, and the rotational frequency of the indoor fan 21 is set to a rotational frequency c1 which is a constant frequency lower than the rotational frequencies a1 to a5 during the warm-air heating operation.

In the first air volume control, any of the seven stages of fan taps B1 to B7 as shown in Table 2 is selected, based on the difference ΔT_{R} between the indoor target temperature and the indoor temperature, and the rotational frequency of the indoor fan 21 is controlled so as to be any of the rotational frequencies (b1 to b7) corresponding to the fan tap. The number of fan taps (B1 to B7) during the first air volume control is greater than the number of fan taps (a1 to a5) during the warm-air heating operation. Therefore, during the first air volume control, the rotational frequency of the indoor fan 21 has more variations. This reduces sound generated by the rotation of the indoor fan 21 when shifting occurs from the first air volume control to the second air volume control.

When the temperature difference ΔT_{R} between the indoor target temperature and the indoor temperature becomes 0°C or smaller during the first air volume control, the indoor fan controller 52 makes switching over from the first air volume control to the second air volume control. Further, when the temperature difference ΔT_{R} between the indoor target temperature and the indoor temperature becomes greater than a predetermined value D1 (e.g., 0°C) during the second air volume control, the indoor fan controller 52 makes switching over from the second air volume control to the first air volume control.

### (Indoor Motor-Operated Valve Controller 53)

The indoor motor-operated valve controller 53 controls the opening degree of the indoor motor-operated valve 23. Table 3 shows control status of operations under various modes of the heating operation. As shown in Table 3, during the warm-air heating operation, the indoor motor-operated valve controller 53 closes the indoor motor-operated valve 23.

**[Table 3]**

| | Indoor motor-operated valve |
|---|---|
| Warm-air heating operation mode | Fully closed |
| First radiation operation mode | Opening degree controlled according to radiation heat exchanger temperature |
| Second radiation operation mode | Opening degree controlled according to radiation heat exchanger temperature |

Further, as shown in Table 3, the indoor motor-operated valve controller 53 controls the opening degree of the indoor motor-operated valve 23 based on the temperature of the radiation heat exchanger 22, during the radiation heating operation (during operations in the first radiation operation mode or the second radiation operation mode). Specifically, a predicted temperature value of the radiation plate 22a of the radiation heat exchanger 22 (hereinafter, radiation heat exchanger temperature) is calculated based on temperatures detected by the panel incoming temperature sensor 25 and the panel outgoing temperature sensor 26, and the opening degree of the indoor motor-operated valve 23 is controlled so that the radiation heat exchanger temperature becomes a target temperature range (e.g., 50 to 55°C) . When the radiation heat exchanger temperature is lower than the predetermined temperature (e.g., 51°C) within the target temperature range, the indoor motor-operated valve controller 53 performs control to increase the opening degree of the indoor motor-operated valve 23. However, the indoor motor-operated valve controller 53 keeps the opening degree of the indoor motor-operated valve 23 at an initial opening degree, until a predetermined time t1 elapses from the beginning of the radiation heating operation.

Note that the embodiment uses both the temperature detected by the panel incoming temperature sensor 25 and the temperature detected by the panel outgoing temperature sensor 26 to calculate the radiation heat exchanger temperature; however, it is possible to use only the temperature detected by the panel incoming temperature sensor 25, or use only the temperature detected by the panel outgoing temperature sensor 26.

### (Compressor Controller 54)

The compressor controller 54 controls the operational frequency of the compressor 30.

The compressor controller 54 controls the frequency of the compressor 30 based on the temperature difference ΔT_{R} between the indoor target temperature and the indoor temperature, during the warm-air heating operation and during the radiation heating operation (operations in the first radiation operation mode or the second radiation operation mode).

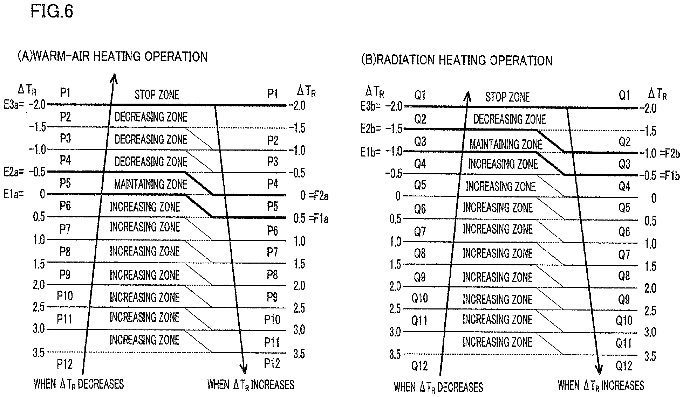

As hereinafter detailed, the compressor controller 54 selects any of zones (PI to P12 or Q1 to Q12) shown in FIG. 6, based on the temperature difference ΔT_{R}, and executes a control operation (compressor stopping, decreasing control, maintaining control, increasing control) which is set for each of the zones. FIG. 6(a) shows zones selectable during the warm-air heating operation, and FIG. 6(b) shows zones selectable during the radiation heating operation. Further, the left sides of the FIG. 6(a) and FIG. 6(b) show a zone where the temperature difference ΔT_{R} decreases; i.e., a zone where the indoor temperature increases. The right sides of FIG. 6 (a) and FIG. 6(b) show a zone where the temperature difference ΔT_{R} increases; i.e., a zone where the indoor temperature drops.

First, the following describes, with reference to the left side of the FIG. 6(a), a case where the temperature difference ΔT_{R} decreases during the warm-air heating operation.

When the temperature difference ΔT_{R} is greater than the predetermined value E1a=0°C (second switch value), the compressor controller 54 selects any of increasing zones P6 to P12, and increases the frequency of the compressor 30 by an amount set for each zone (increasing control). However, when the frequency of the compressor 30 becomes close to the upper limit frequency, the compressor controller 54 controls the frequency of the compressor 30 so as not to exceed the upper limit frequency. Note that the upper limit frequency of the compressor 30 is an upper limit value of the frequency such that the pressure in the refrigerant circuit 10 does not become abnormally high pressure.

When comparing an increasing zone and another increasing zone, with the temperature difference ΔT_{R} of one of the two increasing zones being greater than the other, the amount of increase in the frequency is greater in the increasing zone with the greater temperature difference ΔT_{R} than it is in the other. For example, the amount of increase in the frequency set for the increasing zone P12 is greater than the amount of increase in the frequency set for the increasing zone P6.

When the temperature difference ΔT_{R} is greater than a predetermined value E2a=-0.5°C (first switch value) but not more than E1a=0°C, the compressor controller 54 selects a maintaining zone P5 and maintains the frequency of the compressor 30 without changing (maintaining control).

Further, when the temperature difference ΔT_{R} is greater than a predetermined value E3a=-2.0 but not more than E2a=-0.5°C, the compressor controller 54 selects any of the decreasing zone P2, P3, and P4, and then decreases the frequency of the compressor 30 by an amount of decrease which is set for each of the zones (decreasing control) . When comparing a decreasing zone with another decreasing zone, with the temperature difference ΔT_{R} of one of the two decreasing zones being smaller than the other, the amount of decrease in the frequency is greater in the decreasing zone with the smaller temperature difference ΔT_{R} than it is in the other. For example the amount of decrease in the frequency set for the decreasing zone P2 is greater than the amount of decrease in the frequency set for the decreasing zone P4.

Further, when the temperature difference ΔT_{R} is not more than E3a=-2.0°C, the compressor controller 54 selects stop zone P1, and stop the operation of the compressor 30 (thermo-off).

Further, when the operation is started by using the remote controller 4, the compressor controller 54 resumes operation of the compressor 30 at an initial frequency which is set in advance according to the temperature difference ΔT_{R}. Then, according to the temperature difference ΔT_{R} at the time of starting the operation, a zone on the left side of the FIG. 6(a) is selected, and the frequency of the compressor 30 is controlled according to the selected zone. When any of the increasing zones P6 to P12 is selected, the frequency is increased from the initial frequency by the amount of increase set for each of the zones. When any of the decreasing zones P2, P3, and P4 is selected, the frequency is reduced from the initial frequency by the amount of decrease set for each of the zones. When the maintaining zone P5 is selected, the initial frequency is maintained.

Next, the following describes, with reference to FIG. 6(a), a case where the temperature difference ΔT_{R} increases during the warm-air heating operation.

After thermo-off occurs and the operation of the compressor 30 is stopped, the temperature difference ΔT_{R} increases. When the temperature difference ΔT_{R} becomes greater than -2.0°C, the compressor controller 54 selects the zone P2, and resumes operation of the compressor 30 at the initial frequency which is set in advance. The zone P2 serves as the decreasing zone and also serves as a recovery zone in which operation of the compressor 30 is resumed. After thermo-off occurs and the operation of the compressor 30 is stopped, the operation of the compressor 30 is kept stopped while the temperature difference ΔT_{R} is not more than -2.0°C.

When the temperature difference ΔT_{R} becomes greater than E3a=-2.0°C but not more than -1.0°C while the compressor 30 is operated, the compressor controller 54 selects the decreasing zone P2 and decreases the frequency of the compressor 30 by an amount of decrease corresponding to the decreasing zone P2(decreasing control).

When the temperature difference ΔT_{R} is greater than -1.0°C but not more than a predetermined value F2a=0°C (fourth switch value), the compressor controller 54 selects any of the decreasing zones P3 and P4, and decreases the frequency of the compressor 30 by an amount of decrease set for each of the zones (decreasing control).

When the temperature difference ΔT_{R} is greater than F2a=0°C but not more than predetermined value F1a=0.5°C (third switch value), the compressor controller 54 selects the maintaining zone P5 and maintains the frequency of the compressor 30 without variation (maintaining control).

When the temperature difference ΔT_{R} is greater than F1a=0.5°C, the compressor controller 54 selects any of the increasing zones P6 to P12 and increases the frequency of the compressor 30 by an amount of increase set for each of the zones (increasing control). However, as in the case where the temperature difference ΔT_{R} is reduced, the compressor controller 54 controls the frequency of the compressor 30 so as not to exceed the upper limit frequency, when the frequency of the compressor 30 becomes close to the upper limit frequency.

In the embodiment, the compressor controller 54 selects a zone based on the actual temperature difference ΔT_{R} and controls the frequency of the compressor 30, during the warm-air heating operation.

Next, the following describes, with reference to the left side of FIG. 6(b), a case where the temperature difference ΔT_{R} decreases during the radiation heating operation.

When the temperature difference ΔT_{R} is greater than the predetermined value E1a=-1.0 °C (second switch value), the compressor controller 54 selects any of increasing zones Q4 to Q12, and increases the frequency of the compressor 30 by an amount of increase set for each zone (increasing control) . However, as in the case of warm air heating operation, the compressor controller 54 controls the frequency of the compressor 30 so as not to exceed the upper limit frequency, when the frequency of the compressor 30 becomes close to the upper limit frequency. When comparing an increasing zone and another increasing zone, with the temperature difference ΔT_{R} of one of the two increasing zones being greater than the other, the amount of increase in the frequency is greater in the increasing zone with the greater temperature difference ΔT_{R} than it is in the other.

When the temperature difference ΔT_{R} is greater than a predetermined value E2b=-1.5°C (first switch value) but not more than E1b = -1.0°C, the compressor controller 54 selects a maintaining zone Q3 and maintains the frequency of the compressor 30 without changing (maintaining control).

Further, when the temperature difference ΔT_{R} is greater than a predetermined value E3b=-2 . 0°C but not more than E2b=-1. 5°C, the compressor controller 54 selects any of the decreasing zone Q2, and then decreases the frequency of the compressor 30 (decreasing control).

Further, when the temperature difference ΔT_{R} is not more than E3b=-2.0°C, the compressor controller 54 selects stop zone Q1, and stop the operation of the compressor 30 (thermo-off).

Further, when the operation is started by using the remote controller 4, the compressor controller 54 selects a zone on the left side of FIG. 6(b), according to the temperature difference ΔT_{R}.

Further, when the operation is started by using the remote controller 4, the compressor controller 54 resumes operation of the compressor 30 at an initial frequency which is set in advance according to the temperature difference ΔT_{R}.Then, according to the temperature difference ΔT_{R} at the time of starting the operation, a zone on the left side of the FIG. 6(b) is selected, and the frequency of the compressor 30 is controlled according to the selected zone. When any of the increasing zones Q4 to Q12 is selected, the frequency is increased from the initial frequency by the amount of increase set for each of the zones. When the decreasing zone Q2 is selected, the frequency is reduced from the initial frequency by the amount of decrease set for each of the zones. When the maintaining zone Q3 is selected, the initial frequency is maintained.

In the embodiment, when the temperature difference ΔT_{R} is greater than E1b=-1.0°C (second switch value) at the time when the temperature difference ΔT_{R} of the radiation heating operation is decreased (including the time when the operation is started), the frequency of the compressor 30 is controlled based on a pseudo temperature, instead of the actual temperature difference ΔT_{R}. When the temperature difference ΔT_{R} is not more than E1b, the frequency of the compressor 30 is controlled based on the actual temperature difference ΔT_{R}. Therefore, when the temperature difference ΔT_{R} is greater than E1b, the compressor controller 54 selects a zone based on the pseudo temperature, instead of the actual temperature difference ΔT_{R}. The pseudo temperature is set to a relatively great value (e.g., 3.0 to 3.5°C) so that an increasing zone corresponding to a large amount of increase in the frequency is selected. When the frequency of the compressor 30 is increased by an amount of increase corresponding to the increasing zone selected based on the pseudo temperature, the frequency of the compressor 30 quickly increases. When the frequency of the compressor 30 becomes close to the upper limit frequency, the frequency is controlled so as not to exceed the upper limit frequency. In the embodiment, when the temperature difference ΔT_{R} is greater than E1b, the frequency of the compressor 30 is controlled so as to be nearby the upper limit frequency (at the upper limit frequency or a value slightly smaller than the upper limit frequency). Therefore, a radiation heating with a high heating performance is possible. Further, when the temperature difference ΔT_{R} is reduced to E1b, the compressor controller 54 selects the maintaining zone Q3 based on the actual temperature difference ΔT_{R}, and maintains the frequency of the compressor 30.

As described, the compressor controller 54 makes switching over between the control based on the pseudo temperature and that based on the actual temperature difference ΔT_{R}, according to the temperature difference ΔT_{R}.

Next, the following describes, with reference to FIG. 6(b), a case where the temperature difference ΔT_{R} increases during the radiation heating operation.

After thermo-off occurs and the operation of the compressor 30 is stopped, the temperature difference ΔT_{R} increases. When the temperature difference ΔT_{R} becomes greater than -2.0°C, the compressor controller 54 selects the zone Q2, and resumes operation of the compressor 30 at the initial frequency which is set in advance. The zone Q2 serves as the decreasing zone and also serves as a recovery zone in which operation of the compressor 30 is resumed. After thermo-off occurs and the operation of the compressor 30 is stopped, the operation of the compressor 30 is kept stopped while the temperature difference ΔT_{R} is not more than -2.0°C.

When the temperature difference ΔT_{R} is greater than E3b=-2.0°C but not more than predetermined value F2b=-1. 0°C (fourth switch value) while the compressor 30 is operated, the compressor controller 54 selects the decreasing zone Q2 and decreases the frequency of the compressor 30 (decreasing control).

When the temperature difference ΔT_{R} is greater than F2b= -1.0°C but not more than predetermined value F1b=-0.5°C (third switch value), the compressor controller 54 selects the maintaining zone Q3 and maintains the frequency of the compressor 30 without variation (maintaining control).

When the temperature difference ΔT_{R} is greater than F1b = -0.5°C, the compressor controller 54 selects any of the increasing zones Q4 to Q12 and increases the frequency of the compressor 30 by an amount of increase set for each of the zones (increasing control). However, when the frequency of the compressor 30 becomes close to the upper limit frequency, the compressor controller 54 controls the frequency of the compressor 30 so as not to exceed the upper limit frequency.

In the embodiment, when the temperature difference ΔT_{R} is greater than F1b=-0.5°C (third switch value) at the time when the temperature difference ΔT_{R} of the radiation heating operation is increased, the frequency of the compressor 30 is controlled based on a pseudo temperature, instead of the actual temperature difference ΔT_{R}, as is the case where the temperature difference ΔT_{R} is decreased. When the temperature difference ΔT_{R} is not more than F1b, the frequency of the compressor 30 is controlled based on the actual temperature difference ΔT_{R}. Thus, when the temperature difference ΔT_{R} is not more than F1b, the compressor controller 54 selects any of the maintaining zone Q3, the decreasing zone Q2, and stop zone Q1 based on the actual temperature difference ΔT_{R}, and controls the compressor 30.

When the temperature difference ΔT_{R} is greater than F1b, the compressor controller 54 selects a zone based on the pseudo temperature, instead of the actual temperature difference ΔT_{R}. The pseudo temperature is set to a relatively great value (e.g. , 3.0 to 3.5°C) so that an increasing zone corresponding to a large amount of increase in the frequency is selected. When the frequency of the compressor 30 is increased by an amount of increase corresponding to the increasing zone selected based on the pseudo temperature, the frequency of the compressor 30 quickly increases. When the frequency of the compressor 30 becomes close to the upper limit frequency, the frequency is controlled so as not to exceed the upper limit frequency. In the embodiment, when the temperature difference ΔT_{R} is greater than F1b, the frequency of the compressor 30 is controlled so as to be nearby the upper limit frequency (at the upper limit frequency or a value slightly smaller than the upper limit frequency) . Therefore, a radiation heating with a high heating performance is possible.

As described, the compressor controller 54 makes switching over between the control based on the pseudo temperature and that based on the actual temperature difference ΔT_{R}, according to the temperature difference Δ_{R}.

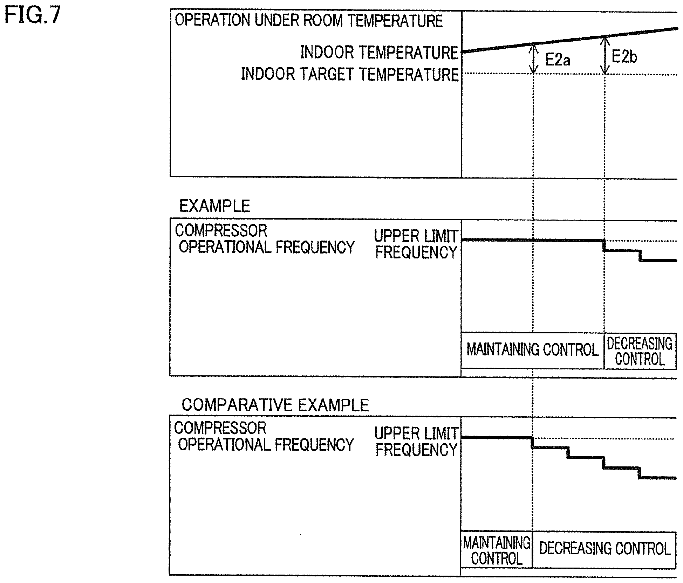

FIG. 7 shows the frequency of the compressor 30 in the embodiment, in a case where the temperature difference ΔT_{R} during the radiation heating operation is decreasing (example shown in FIG. 7), and a frequency of the compressor 30 in a case where compressor 30 is controlled as shown in FIG. 6(a) instead of FIG. 6(b), and the other controls are the same as those of the radiation heating operation of the embodiment (comparative example shown in FIG. 7).

E2b=-1.5°C which is the temperature difference ΔT_{R} at which switching from the maintaining zone Q3 to the decreasing zone Q2 shown in FIG. 6(b) occurs in cases where the temperature difference ΔT_{R} is decreasing is smaller than E2a=-0.5°C which is the temperature difference ΔT_{R} at which switching from the maintaining zone P5 to decreasing zone P4 shown in FIG. 6(a) occurs.

Therefore, switching over from the maintaining zone Q3 to the decreasing zone Q2 occurs at a timing that is behind a timing at which switching from the maintaining zone P5 to the decreasing zone P4 occurs, when the condition of the temperature difference ΔT_{R} is the same.

Thus, as shown in FIG. 7, in the radiation heating operation of the embodiment in which the compressor 30 is controlled based on FIG. 6(a), it takes longer time before switching over from the maintaining control to the decreasing control occurs; i.e., the timing of decreasing the frequency of the compressor 30 is delayed, as compared with the cases where the compressor 30 is controlled based on FIG. 6(a) as in the case of the warm-air heating operation. Since a decrease in the radiation heat exchanger temperature is delayed, the radiation heat exchanger temperature is maintained at a high temperature.

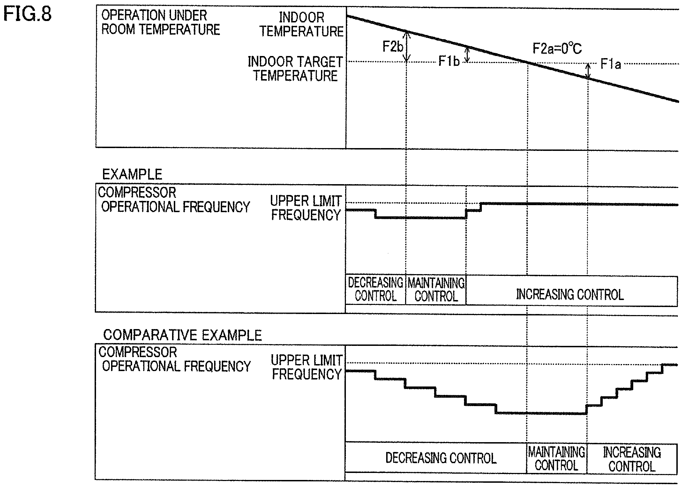

FIG. 8 shows the frequency of the compressor 30 in the embodiment, in a case where the temperature difference ΔT_{R} during the radiation heating operation is increasing (example shown in FIG. 8), and a frequency of the compressor 30 in a case where compressor 30 is controlled as shown in FIG. 6(a) instead of FIG. 6 (b), and the other controls are the same as those of the radiation heating operation of the embodiment (comparative example shown in FIG. 8).

F2b=-1.0°C which is the temperature difference ΔT_{R} at which switching from the decreasing zone Q2 to the maintaining zone Q3 shown in FIG. 6(b) occurs in cases where the temperature difference ΔT_{R} is increasing is smaller than F2a= 0°C which is the temperature difference ΔT_{R} at which switching from decreasing zone P4 to the maintaining zone P5 shown in FIG. 6(a) occurs.

Therefore, switching over from the decreasing zone Q2 to the maintaining zone Q3 occurs at a timing that is behind a timing at which switching from the decreasing zone P4 to the maintaining zone P5 occurs, when the condition of the temperature difference ΔT_{R} is the same.

Thus, as shown in FIG. 8, in the radiation heating operation of the embodiment in which the compressor 30 is controlled based on FIG. 6 (a), it takes shorter time before switching over from the decreasing control to the maintaining control occurs, as compared with the cases where the compressor 30 is controlled based on FIG. 6(a) as in the case of the warm-air heating operation. Since a decrease in the radiation heat exchanger temperature is restrained earlier, the radiation heat exchanger temperature is maintained at a high temperature.

F1b=-0.5°C which is the temperature difference ΔT_{R} at which switching from the maintaining zone Q3 to the increasing zone Q4 shown in FIG. 6(b) occurs in cases where the temperature difference ΔT_{R} is increasing is smaller than Fla= 0.5°C which is the temperature difference ΔT_{R} at which switching from the maintaining zone P5 shown in FIG. 6(a) occurs.

Therefore, switching over from the maintaining zone Q3 to the increasing zone Q4 occurs at a timing that is behind a timing at which switching from the maintaining zone P5 to the increasing zone P6 occurs, when the condition of the temperature difference ΔT_{R} is the same.

Thus, as shown in FIG. 8, in the radiation heating operation of the embodiment in which the compressor 30 is controlled based on FIG. 6 (a), it takes shorter time before switching over from the maintaining control to the increasing control occurs; i.e., the frequency of the compressor 30 is increased earlier, as compared with the cases where the compressor 30 is controlled based on FIG. 6(a) as in the case of the warm-air heating operation. Since the radiation heat exchanger temperature is promptly raised to a high temperature, the radiation heat exchanger temperature is maintained at a high temperature.

### (Outdoor Motor-Operated Valve Controller 55)

The outdoor motor-operated valve controller 55 controls the opening degree of the outdoor motor-operated valve 34, based on the temperature difference ΔT_{R} between the indoor target temperature and the indoor temperature.

### <Operation of Air conditioner 1>

Next, the following describes an operation of the air conditioner 1 in the heating operation mode.

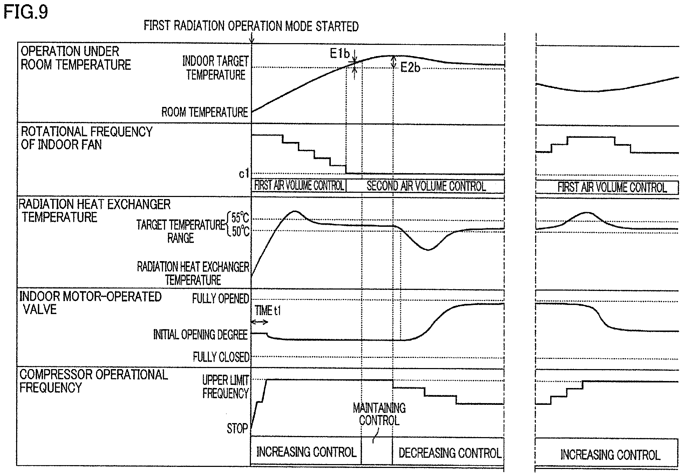

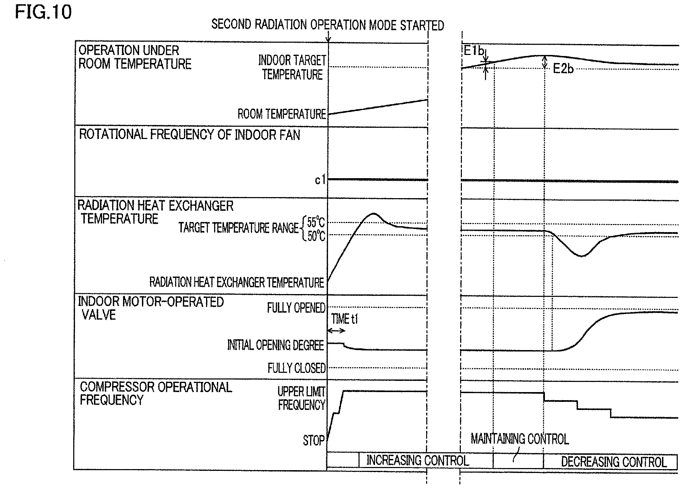

The description about the first radiation operation mode and the second radiation operation mode is provided with reference to graphs of FIG. 9 and FIG. 10. In each of the graphs of FIG. 9 and FIG. 10, the horizontal axis represents the time, and the vertical axis represents the indoor temperature, the rotational frequency of the indoor fan 21, the operational frequency of the compressor 30, radiation heat exchanger temperature (calculated value), and the opening degree of the indoor motor-operated valve 23.

### (Operation in Warm-Air Heating Operation Mode)

When the remote controller 4 is operated to start an operation in the warm-air heating operation mode, and when the "auto air volume" is selected as the air volume setting, the indoor fan controller 52 controls the rotational frequency of the indoor fan 21 according to the difference ΔT_{R} between the indoor target temperature and the indoor temperature. Further, the indoor motor-operated valve controller 53 closes the indoor motor-operated valve 23.

When the indoor temperature at the beginning of operation is lower than the indoor target temperature (when the temperature difference ΔT_{R} between the indoor target temperature and the indoor temperature is greater than 0°C), the compressor controller 54 performs control to increase the frequency of the compressor 30. When the indoor temperature increases and the temperature difference ΔT_{R} between the indoor target temperature and the indoor temperature is reduced to E1a=0°C, the frequency of the compressor 30 is maintained. Further, when the indoor temperature increases and the temperature difference ΔT_{R} decreases to E2a=-0.5°C, the frequency of the compressor 30 is controlled so as to decrease.

Further, when the remote controller 4 is operated to start an operation in the warm-air heating operation mode, and one of "Strong" or "Weak" is selected as the air volume setting, the rotational frequency of the indoor fan 21 is maintained at a predetermined rotational frequency, and the indoor motor-operated valve 23 and the compressor 30 are controlled as are done when the "auto air volume" is selected.

### (Operation in First Radiation Operation Mode)

As shown in FIG. 9, when the remote controller 4 is operated to start an operation in the first radiation operation mode, the indoor motor-operated valve 23 is controlled so that its opening degree is the initial opening degree, until a predetermined time t1 elapses from the beginning of operation. Upon elapse of the predetermined time t1, the opening degree of the indoor motor-operated valve 23 is controlled based on the radiation heat exchanger temperature and the target temperature range. Note that the initial opening degree of the indoor motor-operated valve 23 shown in FIG. 9 is smaller than an opening degree corresponding to the fully-opened state . However, the initial opening degree may correspond to the fully-opened state.

When the indoor temperature at the beginning of operation is lower than the indoor target temperature (when the temperature difference ΔT_{R} between the indoor target temperature and the indoor temperature is greater than 0°C), the indoor fan controller 52 starts the first air volume control, and the rotational frequency of the indoor fan 21 is controlled to a rotational frequency according to the difference ΔT_{R} between the indoor target temperature and the indoor temperature. Further, the compressor controller 54 performs control so as to increase the frequency of the compressor 30. However, when the frequency of the compressor 30 increases and becomes close to the upper limit frequency, the frequency is controlled so as not to exceed the upper limit frequency. Note that the frequency of the compressor 30 is maintained at the upper limit frequency in FIG. 9; however, this is to illustrate, in a simple manner, that the frequency of the compressor 30 is nearby the upper limit frequency (is at or slightly lower than the upper limit frequency). At this time, the frequency of the compressor 30 is high, and therefore the temperature (blow-out temperature) of the air blown out of the indoor unit 2 has a high temperature. Note that, although the frequency of the compressor 30 is maintained in the vicinity of the upper limit frequency in FIG. 9, the frequency of the compressor 30 may not rise to a frequency nearby the upper limit frequency, if the amount of increase in the increasing zone corresponding to the pseudo temperature is small, or if it takes a short time before the temperature difference ΔT_{R} to reach -1.0°C (until switching over occurs to the control based on the actual temperature difference ΔT_{R}), from the beginning of operation.

When the indoor temperature rises and the temperature difference ΔT_{R} between the indoor target temperature and the indoor temperature decreases to 0°C during the first air volume control, the indoor fan controller 52 causes switching over from the first air volume control to the second air volume control. This way, the rotational frequency of the indoor fan 21 is reduced to the rotational frequency c1.

When the indoor temperature further rises and the temperature difference ΔT_{R} between the indoor target temperature and the indoor temperature decreases to E2b=-1.5°C, the frequency of the compressor 30 is controlled so as to decrease from the upper limit frequency. This causes a decrease in the blow-out temperature. This way, the indoor temperature is made close to the indoor target temperature, and the warm air accumulated nearby the ceiling of the room is stirred, thus reducing the temperature difference between the temperatures in the areas nearby the ceiling and the floor surface of the room. The decrease in the frequency of the compressor 30 causes a temporary decrease in the radiation heat exchanger temperature; however, the indoor motor-operated valve controller 53 increases the opening degree of the indoor motor-operated valve 23, when the radiation heat exchanger temperature becomes lower than a predetermined temperature within the target temperature range (e.g. , 51°C) . This raises the radiation heat exchanger temperature and restrains a decrease in the radiation heat exchanger temperature.

Further, when the indoor temperature drops and the temperature difference ΔT_{R} between the indoor target temperature and the indoor temperature becomes greater than the D1=0°C, the indoor fan controller 52 causes switching over from the second air volume control to the first air volume control. D1 may be a value greater than 0°C. Note that FIG. 9 omits illustration of the switching over from the second air volume control to the first air volume control, done by the indoor fan controller 52.

### (Operation in Second Radiation Operation Mode)

As shown in FIG. 10, when the remote controller 4 is operated to start an operation in the second radiation operation mode, the indoor fan controller 52 controls the rotational frequency of the indoor fan 21 to the constant rotational frequency c1. Further, the indoor motor-operated valve 23 is controlled so that its opening degree is the initial opening degree, until a predetermined time t1 elapses from the beginning of operation. Upon elapse of the predetermined time t1, the opening degree of the indoor motor-operated valve 23 is controlled based on the radiation heat exchanger temperature and the target temperature range.

When the indoor temperature at the beginning of operation is lower than the indoor target temperature (when the temperature difference ΔT_{R} between the indoor target temperature and the indoor temperature is greater than 0°C), the compressor controller 54 performs control to increase the frequency of the compressor 30. However, when the frequency of the compressor 30 increases and becomes close to the upper limit frequency, the frequency is controlled so as not to exceed the upper limit frequency. At this time, the frequency of the compressor 30 is high and the blowing air quantity is small. Therefore, the blow-out temperature is high.

When the indoor temperature further rises and the temperature difference ΔT_{R} between the indoor target temperature and the indoor temperature decreases to E2b=-1.5°C, the compressor controller 54 controls the frequency of the compressor 30 so that the frequency of the compressor 30 decrease from the upper limit frequency. Since the blow-out temperature drops, the indoor temperature is made close to the indoor target temperature, and the temperature difference between the temperatures in the areas nearby the ceiling and the floor surface of the room is reduced. The decrease in the frequency of the compressor 30 causes a temporary decrease in the radiation heat exchanger temperature; however, the indoor motor-operated valve controller 53 increases the opening degree of the indoor motor-operated valve 23, when the radiation heat exchanger temperature becomes lower than a predetermined temperature within the target temperature range (e.g., 51°C). This raises the radiation heat exchanger temperature and restrains a decrease in the radiation heat exchanger temperature. Note that FIG. 10 partially omits illustration of the transition of the temperature difference ΔT_{R} from the beginning of the operation to E2b.

### (Defrost Operation)

Further, to remove frost on the outdoor heat exchanger 32 during an operation in the heating operation mode, the four-way valve 31 in the air conditioner 1 is switched to the state shown in the broken line in FIG. 1 and FIG. 2 so as to switch the operation mode from the heating operation to defrost operation. In the air conditioner 1 of the embodiment, the indoor motor-operated valve 23 is closed during the defrost operation. This way, the low-temperature refrigerant does not flow in the radiation heat exchanger 22. Therefore, a decrease in the radiation heat exchanger temperature is restrained. When the heating operation is resumed, the radiation heat exchanger temperature is promptly brought within the target temperature range.

Note that the control of the indoor motor-operated valve 23 during the defrost operation is not limited to the above, and the indoor motor-operated valve 23 may be maintained at a predetermined opening degree until the radiation heat exchanger temperature becomes a predetermined temperature, and the indoor motor-operated valve 23 may be closed when the radiation heat exchanger temperature drops to the above predetermined temperature. In this case, the low-temperature refrigerant flows in the radiation heat exchanger 22, and therefore the radiation heat exchanger temperature drops to a certain extent. However, since the high-temperature refrigerant in the radiation heat exchanger 22 is usable for defrosting the outdoor heat exchanger 32, the frost on the outdoor heat exchanger 32 is more promptly removed than the above mentioned case. Further, this also prevents frosting on the radiation heat exchanger 22 during the defrost operation.

### <Characteristics of Air Conditioner 1>

In the air conditioner 1 of the embodiment, the blow-out temperature in the warm-air heating drops when the frequency of the compressor 30 is decreased. Therefore, the temperature difference between the temperatures in the areas nearby the ceiling and the floor surface of the room is reduced. Further, increasing the opening degree of the indoor motor-operated valve 23 after the frequency of the compressor 30 is decreased restrains a decrease in the temperature of the radiation heat exchanger 22. This improves the comfort.

In the air conditioner 1 of the embodiment, the frequency of the compressor 30 is restrained based on the indoor temperature; therefore the frequency of the compressor 30 is decreased when the temperature difference between the temperatures in the areas nearby the ceiling and the floor surface of the room is large.

In the air conditioner 1 of the embodiment, the opening degree of the indoor motor-operated valve 23 is controlled based on the temperature of the radiation heat exchanger 22 . Therefore, increasing the opening degree of the indoor motor-operated valve 23 when there is a decrease in the frequency of the compressor 30 and in the temperature of the radiation heat exchanger 22 restrains a decrease in the temperature of the radiation heat exchanger 22.

Since the radiation heat exchanger 22 and the indoor motor-operated valve 23 of the air conditioner 1 of the embodiment are provided in parallel with the indoor heat exchanger 20, controlling the opening degree of the indoor motor-operated valve 23 allows adjustment of the flow rate of the refrigerant in the radiation heat exchanger 22 and the indoor heat exchanger 20. Further, it is possible to make switching over between the warm-air heating operation which performs the warm-air heating by causing the refrigerant not to flow in the radiation heat exchanger 22 and the radiation heating operation which causes the refrigerant to flow in the radiation heat exchanger 22, simply by opening or closing the indoor motor-operated valve 23.

Since the air conditioner 1 of the embodiment blows out warm wind from the upper end portion of its casing, the warm air is easily accumulated nearby the ceiling of the room, causing a temperature difference between temperatures in the areas nearby the ceiling and the floor surface of the room. Therefore, a structure to reduce the temperature difference between the temperatures in the areas nearby the ceiling and the floor surface of the room is particularly effective.

In the air conditioner 1 of the embodiment, the frequency of the compressor 30 is controlled based on the pseudo temperature when the temperature difference ΔT_{R} between the radiation heating operation and the indoor target temperature is greater than E1b or F1b, during the indoor temperature. Therefore, the frequency of the compressor 30 is promptly raised and made close to the upper limit frequency. This realizes a high heating performance of the radiation heating, and maintains the temperature of the radiation heat exchanger 22 at a high temperature.

In air conditioner 1 of the embodiment during the radiation heating operation, the timing of decreasing the frequency of the compressor 30 is made behind the timing of the same in the warm-air heating operation. This restrains a decrease in the temperature of the radiation heat exchanger 22, as compared with a case where the timing is made the same as that in the warm-air heating operation.

Further, by making the timing for increasing the frequency of the compressor 30 in the radiation heating operation earlier than the timing of the same in the warm-air heating operation, the temperature of the radiation heat exchanger 22 is brought up to a high temperature faster than a case where the timing is made the same as that in the warm-air heating operation. This enables maintaining of the temperature of the radiation heat exchanger 22 at a high temperature.

Further, by making the timing for making switching over from the control to decrease the frequency of the compressor 30 to the control to maintain the frequency during the radiation heating operation earlier than the timing of the same in the warm-air heating operation, the temperature of the radiation heat exchanger 22 is brought up to a high temperature faster than a case where the timing is made the same as that in the warm-air heating operation. This enables maintaining of the temperature of the radiation heat exchanger 22 at a high temperature.

Since the blowing air quantity is small in an operation in the second radiation operation mode, it is possible to prevent the indoor temperature from becoming excessively higher than the indoor target temperature, even if the timing for increasing or decreasing the frequency of the compressor 30 during the operation in the first radiation operation mode is different from the timing of the same in the warm-air heating operation. Further, in the second air volume control during an operation in the first radiation operation mode, the blowing air quantity is small, and since the first air volume control in which the blowing air quantity is larger than that of the second air volume control is control performed until the indoor temperature reaches the indoor target temperature, it is possible to prevent the indoor temperature from becoming excessively higher than the indoor target temperature, even if the timing for increasing or decreasing the frequency of the compressor 30 during the operation in the first radiation operation mode is different from the timing of the same in the warm-air heating operation.

In the air conditioner 1 of the embodiment, the indoor fan 21 is rotated at a small rotational frequency in the second air volume control during an operation in the first radiation operation mode and during an operation in the second radiation operation mode. This allows warm-air heating which causes the user to feel almost no draft. Further, by not stopping the indoor fan 21, the heat exchange amount by the indoor heat exchanger 20 is made large, and the pressure in the refrigerant circuit 10 is kept from being excessively high. Therefore, as compared with a case where the indoor fan 21 is stopped while the radiation heating is performed, the operational frequency of the compressor 30 in the outdoor unit can be increased and the heating performance can be improved.

In the air conditioner 1 of the embodiment during an operation in the first radiation operation mode, the first air volume control is performed when the indoor temperature is low, and the second air volume control is performed when the indoor temperature is high. This enables the indoor temperature to promptly rise when the indoor temperature is low, and automatically switches over to heating that causes almost no feeling of draft, when the indoor temperature becomes high.

The embodiment of the present invention is described above with reference to the drawings. However, it should be understood that the specific configuration is not limited to the embodiment. The scope of the present invention is defined not by the above embodiments but by claims set forth below, and shall encompass the equivalents in the meaning of the claims and every modification within the scope of the claims.

The temperature difference ΔT_{R}(E1a, F1a) at which the increasing zone and the maintaining zone switches over in the control of the compressor 30 during the warm-air heating operation are not limited to the value shown in FIG. 6 (a), and may take a positive value for example. Further, the temperature difference ΔT_{R} (E1b, F1b) at which the increasing zone and the maintaining zone switches over in the control of the compressor 30 during the radiation heating operation is not limited to the value shown in FIG. 6 (a). However, E1b and F1b are preferably smaller than E1a and F1a, respectively.

The temperature difference ΔT_{R} (E2a, F2a) at which the maintaining zone and the decreasing zone switches over in the control of the compressor 30 during the warm-air heating operation is not limited to the value shown in FIG. 6(a), and may take a positive value for example. Further, the temperature difference ΔT_{R} (E2b, F2b) at which the maintaining zone and the decreasing zone switches over in the control of the compressor 30 during the radiation heating operation is not limited to the value shown in FIG. 6(a). However, E2b and F2b are preferably smaller than E2a and F2a, respectively.

The temperature difference ΔT_{R} at which switching over occurs between the control based on the actual temperature difference ΔT_{R} and the control based on the pseudo temperature, when the temperature difference ΔT_{R} decreases in the control of compressor 30 during the radiation heating operation, is not limited to Elb, and may be the temperature difference ΔT_{R} (E2b) at which the maintaining zone and the increasing zone switches over. Further, the temperature difference ΔT_{R} may take other values.

Further, the temperature difference ΔT_{R} at which switching over occurs between the control based on the actual temperature difference ΔT_{R} and the control based on the pseudo temperature, when the temperature difference ΔT_{R} increases in the control of the compressor 30 during the radiation heating operation, is not limited to F1b, and may be the temperature difference ΔT_{R} (F2b) at which the maintaining zone and the increasing zone switches over. Further, the temperature difference ΔT_{R} may take other values.

In the embodiment, during the radiation heating operation, the compressor 30 is controlled by selecting the zone based on the pseudo temperature instead of the actual temperature difference ΔT_{R}, when the temperature difference ΔT_{R} is large, for the purpose of maintaining the frequency of the compressor 30 at the upper limit frequency. However, it is possible to control the frequency of the compressor 30 by selecting the zone always based on the actual temperature difference ΔT_{R}. In this modification however, the frequency of the compressor 30 may not reach the upper limit frequency, depending on the temperature difference ΔT_{R}.

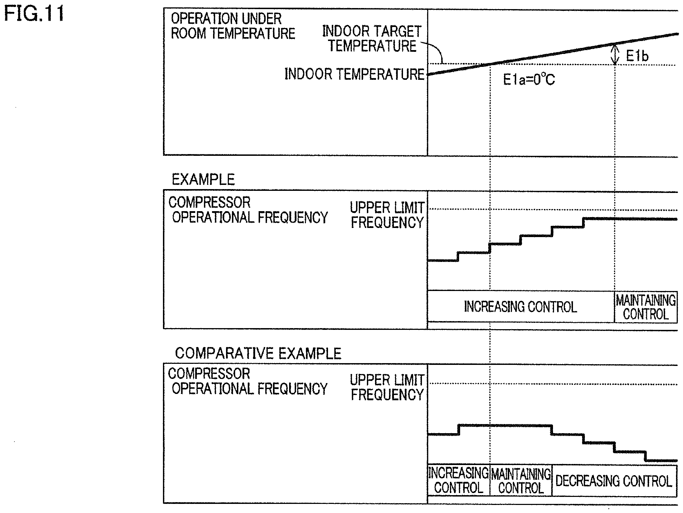

FIG. 11 shows a frequency of the compressor 30 (example shown in FIG. 11) in cases where the frequency of the compressor 30 does not reach the upper limit frequency in the above modification (pseudo temperature not used in controlling the compressor 30 during the radiation heating operation), and a frequency of the compressor 30 (comparative example shown in FIG. 11) in cases where the compressor 30 is controlled as shown in FIG. 6 (a) instead of FIG. 6(b), and where the rest of control is the same as the above modification.

E1b=-1.0°C which is the temperature difference Δ_{R} at which switching from the increasing zone Q4 to the maintaining zone Q3 shown in FIG. 6(b) occurs in cases where the temperature difference ΔT_{R} is decreasing is smaller than E1a= 0°C which is the temperature difference ΔT_{R} at which switching from the increasing zone P6 to the maintaining zone P5 shown in FIG. 6(a) occurs.

Therefore, switching over from the increasing zone Q4 to the maintaining zone Q3 occurs at a timing that is behind a timing at which switching from the increasing zone P6 to the maintaining zone P5 occurs, when the condition of the temperature difference ΔT_{R} is the same.

Thus, as shown in FIG. 11, in the radiation heating operation of the above modification in which the compressor 30 is controlled based on FIG. 6(a), it takes longer time before switching over from the increasing control to the maintaining control occurs, as compared with the cases where the compressor 30 is controlled based on FIG. 6(a) as in the case of the warm-air heating operation. Since a decrease in the radiation heat exchanger temperature is delayed, the radiation heat exchanger temperature is maintained at a high temperature.

In the above embodiment, both the warm-air heating operation and the radiation heating operation perform control to decrease the frequency of the compressor 30 after making switching over from the control to increase the frequency of the compressor 30 to the control to make no changes in the frequency, in cases where the temperature difference ΔT_{R} is decreasing. However, it is possible to make switching over from the control to increase the frequency to the control to decrease the frequency. In other words, the maintaining zone on the left side (when temperature difference ΔT_{R} decreases) of FIG. 6 (a) or FIG. 6(b) may be changed to the decreasing zone or the increasing zone. For example, when the maintaining zone is changed to the increasing zone, there will be delay in the timing for stopping the increasing control. Therefore, the temperature of the radiation heat exchanger 22 is maintained at a high temperature. However, in terms of comfort, the above embodiment in which the blow-out temperature and the temperature of the radiation heat exchanger 22 are gradually reduced is preferable.

In the above embodiment, both the warm-air heating operation and radiation heating operation perform control to increase the frequency of the compressor 30 after making switching over from the control to decrease the frequency of the compressor 30 to the control to make no changes in the frequency, in cases where the temperature difference ΔT_{R} is increasing. However, it is possible to make switching over from the control to decrease the frequency to the control to increase the frequency. In other words, the maintaining zone on the right side (when the temperature difference ΔT_{R} increases) of FIG. 6 (a) or FIG. 6(b) may be changed to the decreasing zone or the increasing zone. For example, when the maintaining zone is changed to the increasing zone, the timing for starting the increasing control is made earlier. Therefore, the temperature of the radiation heat exchanger 22 is quickly brought up to a high temperature. However, in terms of comfort, the above embodiment in which the blow-out temperature and the temperature of the radiation heat exchanger 22 are gradually raised is preferable.

In the above embodiment, the opening degree of the indoor motor-operated valve 23 during the radiation heating operation is controlled based on the temperature of the radiation heat exchanger 22. However, the opening degree may be controlled based on the temperature of the indoor heat exchanger 20. Specifically, the opening degree of the indoor motor-operated valve 23 is controlled so as to bring the temperature (hereinafter, indoor heat exchanger temperature) detected by the indoor heat exchanger temperature sensor 27 to a predetermined temperature. When the indoor heat exchanger temperature is lower than the predetermined temperature, the indoor motor-operated valve controller 53 performs control to increase the opening degree of the indoor motor-operated valve 23. Further, when the indoor heat exchanger temperature is higher than the predetermined temperature, the indoor motor-operated valve controller 53 performs control to decrease the opening degree of the indoor motor-operated valve 23. However, as in the above embodiment, the indoor motor-operated valve controller 53 keeps the opening degree of the indoor motor-operated valve 23 at an initial opening degree, until a predetermined time t1 elapses from the beginning of the radiation heating operation.

When the temperature difference ΔT_{R} decreases during the radiation heating operation, and the frequency of the compressor 30 switches from a maintaining state to a decreasing state, the indoor heat exchanger temperature is lowered. When the indoor heat exchanger temperature drops below the predetermined temperature, the indoor motor-operated valve controller 53 increases the opening degree of the indoor motor-operated valve 23, which causes an increase in the radiation heat exchanger temperature. Therefore, this modification restrains a decrease in the temperature of the radiation heat exchanger 22.

In the above embodiment, the rotational frequency of the indoor fan 21 is the rotational frequency c1 and is constant during the second air volume control of the first radiation operation mode and during an operation in the second radiation operation mode. However, the rotational frequency of the indoor fan 21 may vary as long as it is lower than the rotational frequency during the first air volume control and during the warm-air heating operation.

In the above embodiment, the indoor unit 2 draws in the air mainly through the principal inlet 28a provided to the lower wall of the casing 28 and blows out the air from the outlet 28d provided to the upper end portion of the casing 28. However, the positions of the principal inlet 28a and the outlet 28d are not limited to those in the embodiment. For example, the air may be drawn in through an upper part of the indoor unit 2 and blown out from a lower part of the indoor unit 2.

The above embodiment deals with a case where the present invention is applied to an air conditioner having an indoor unit which is installed in the vicinity of the floor surface. However, the present invention is applicable to an air conditioner having an indoor unit which is installed on a wall.

### Industrial Applicability

The present invention allows improvement of comfort.

### Reference Signs List

- 1: Air Conditioner
- 2: Indoor Unit
- 10: Refrigerant Circuit
- 11: Principal Channel
- 11a: Branching Section
- 11b: Merging Section
- 12: First Channel
- 13: Second Channel
- 20: Indoor Heat Exchanger
- 21: Indoor Fan (Fan)
- 22: Radiation Heat Exchanger
- 23: Indoor Motor-Operated Valve (Valve Structure)
- 28: Casing
- 28d: Outlet
- 30: Compressor
- 32: Outdoor Heat Exchanger
- 34: Outdoor Motor-Operated Valve (Decompression Structure)

## Claims

1. An air conditioner, comprising:
an indoor unit (2) and an outdoor unit (3);
the indoor unit (2) comprising an indoor heat exchanger (20), a fan (21), a radiation heat exchanger (22), and a casing (28) accommodating therein the fan (21) and the indoor heat exchanger (20), wherein the casing (28) has an outlet (28d) for blowing out air, the indoor heat exchanger (20) is provided inside the indoor unit (2) so as to oppose to the fan (21), and the radiation heat exchanger (22) is provided on a surface of the indoor unit (2);
the outdoor unit (3) comprising a compressor (30), an outdoor heat exchanger (32), and a decompression structure (34),
wherein the air conditioner comprises a refrigerant circuit (10) having the compressor (30), the indoor heat exchanger (20), the radiation heat exchanger (22), the decompression structure (34), and the outdoor heat exchanger (32);
wherein the air conditioner is configured to be operated in a heating operation mode for performing an indoor heating operation,
the refrigerant circuit further comprising:
a principal channel (11) in which the decompression structure (34), the outdoor heat exchanger (32), and the compressor (30) are provided in this order from an upstream side towards a downstream side during the heating operation, the principal channel (11) extending between a branching section (11a) and a merging section (11b);
a first channel (12) having the indoor heat exchanger (20), which is configured to connect the branching section (11a) on the downstream side of the compressor (30) with the merging section (11b) provided on the upstream side of the decompression structure (34), during the heating operation; and
a second channel (13) having the radiation heat exchanger (22), which connects the branching section (11a) and the merging section (11b) in parallel with the first channel (12) during the heating operation,
a valve structure (23) configured to adjust the amount of a refrigerant to be supplied to the radiation heat exchanger (22) is provided to the refrigerant circuit (10); and
wherein the air conditioner comprises a valve controller (53), the valve controller being configured to increase an opening degree of the valve structure (23) after a frequency of the compressor (30) is decreased, when a warm-air heating is performed by causing the refrigerant to flow in the indoor heat exchanger (20) and a radiation heating is performed by causing the refrigerant to flow in the radiation heat exchanger (22) so that a flow rate of the refrigerant flowing in the radiation heat exchanger (22) and in the indoor heat exchanger (20) is adjusted.

2. The air conditioner according to claim 1,
wherein the valve structure (23) is provided between the radiation heat exchanger (22) and the merging section (11b) in the second channel (13).

3. The air conditioner according to claim 1 or 2, wherein the air conditioner is configured to control the frequency of the compressor (30) based on a temperature difference between an indoor target temperature and an indoor temperature.

4. The air conditioner according to any one of claims 1 to 3, wherein the air conditioner is configured to control the opening degree of the valve structure (23) based on a temperature of the radiation heat exchanger (22).

5. The air conditioner, according to any one of claims 1 to 3, wherein the air conditioner is configured to control the opening degree of the valve structure (23) based on a temperature of the indoor heat exchanger (20).

6. The air conditioner according to any one of claims 1 to 5, wherein the outlet (28d) is provided at an upper end portion of the casing (28).

7. The air conditioner according to any one of the previous claims, the air conditioner being configured such that the blow-out temperature from the outlet (28d) decreases as a frequency of the compressor (30) is decreased.

## Patentansprüche

1. Klimaanlage, umfassend:
eine Innenraumeinheit (2) und eine Außeneinheit (3);
wobei die Innenraumeinheit (2) einen Innenraumwärmetauscher (20), ein Gebläse (21), einen Strahlungswärmetauscher (22) und ein Gehäuse (28) umfasst, in dem das Gebläse (21) und der Innenraumwärmetauscher (20) untergebracht sind, wobei das Gehäuse (28) einen Auslass (28d) zum Ausblasen von Luft aufweist, der Innenraumwärmetauscher (20) innerhalb der Innenraumeinheit (2) bereitgestellt ist, um dem Gebläse (21) gegenüber zu stehen, und der Strahlungswärmetauscher (22) auf einer Oberfläche der Innenraumeinheit (2) bereitgestellt ist;
die Außeneinheit (3) einen Kompressor (30), einen Außenwärmetauscher (32) und eine Dekompressionsstruktur (34) umfasst,
wobei die Klimaanlage einen Kältemittelkreislauf (10) umfasst, der den Kompressor (30), den Innenraumwärmetauscher (20), den Strahlungswärmetauscher (22), die Dekompressionsstruktur (34) und den Außenwärmetauscher (32) aufweist;
wobei die Klimaanlage konfiguriert ist, um in einer Heizbetriebsart zum Durchführen eines Innenraumheizbetriebs betrieben zu werden,
wobei der Kältemittelkreislauf weiter umfasst:
einen Hauptkanal (11), in dem die Dekompressionsstruktur (34), der Außenwärmetauscher (32) und der Kompressor (30) in dieser Reihenfolge von einer stromaufwärts gerichteten Seite zu einer stromabwärts gerichteten Seite während des Heizbetriebs bereitgestellt sind, wobei sich der Hauptkanal (11) zwischen einem Abzweigungsabschnitt (11a) und einem Zusammenführungsabschnitt (11b) erstreckt;
einen ersten Kanal (12) aufweisend den Innenraumwärmetauscher (20), der konfiguriert ist, um den Abzweigungsabschnitt (11a) auf der stromabwärts gelegenen Seite des Kompressors (30) mit dem Zusammenführungsabschnitt (11b) zu verbinden, der auf der stromaufwärts gelegenen Seite der Dekompressionsstruktur (34) während des Heizbetriebs bereitgestellt ist; und
einen zweiten Kanal (13) aufweisend den Strahlungswärmetauscher (22), der den Abzweigungsabschnitt (11a) und den Zusammenführungsabschnitt (11b) während des Heizbetriebs parallel zum ersten Kanal (12) verbindet,
eine Ventilstruktur (23), die konfiguriert ist, um die Menge eines dem Strahlungswärmetauscher (22) zuzuführenden Kältemittels einzustellen, die dem Kältemittelkreislauf (10) zugeführt wird; und
wobei die Klimaanlage eine Ventilsteuerung (53) umfasst, wobei die Ventilsteuerung konfiguriert ist, um einen Öffnungsgrad der Ventilstruktur (23) zu erhöhen, nachdem eine Frequenz des Kompressors (30) verringert wurde, wenn eine Warmlufterwärmung durchgeführt wird, indem das Kältemittel in dem Innenraumwärmetauscher (20) strömen gelassen wird, und eine Strahlungsheizung durchgeführt wird, indem das Kältemittel veranlasst wird, den Strahlungswärmetauscher (22) zu durchströmen, so dass eine Durchflussrate des Kältemittels, das in dem Strahlungswärmetauscher (22) und in dem Innenraumwärmetauscher (20) strömt, eingestellt wird.

2. Klimaanlage nach Anspruch 1,
wobei die Ventilstruktur (23) zwischen dem Strahlungswärmetauscher (22) und dem Zusammenführungsabschnitt (11b) im zweiten Kanal (13) bereitgestellt ist.

3. Klimaanlage nach Anspruch 1 oder 2, wobei die Klimaanlage konfiguriert ist, um die Frequenz des Kompressors (30) basierend auf einer Temperaturdifferenz zwischen einer Innensolltemperatur und einer Innentemperatur zu steuern.

4. Klimaanlage nach einem der Ansprüche 1 bis 3, wobei die Klimaanlage konfiguriert ist, um den Öffnungsgrad der Ventilstruktur (23) basierend auf einer Temperatur des Strahlungswärmetauschers (22) zu steuern.

5. Klimaanlage nach einem der Ansprüche 1 bis 3, wobei die Klimaanlage konfiguriert ist, um den Öffnungsgrad der Ventilstruktur (23) basierend auf einer Temperatur des Innenraumwärmetauschers (20) zu steuern.

6. Klimaanlage nach einem der Ansprüche 1 bis 5, wobei der Auslass (28d) an einem oberen Endabschnitt des Gehäuses (28) bereitgestellt ist.

7. Klimaanlage nach einem der vorstehenden Ansprüche, wobei die Klimaanlage so konfiguriert ist, dass die Ausblastemperatur aus dem Auslass (28d) abnimmt, wenn eine Frequenz des Kompressors (30) abnimmt.

## Revendications

1. Climatiseur comprenant :
une unité intérieure (2) et une unité extérieure (3) ;
l'unité intérieure (2) comprenant un échangeur de chaleur intérieur (20), un ventilateur (21), un échangeur de chaleur à rayonnement (22), et un boîtier (28) logeant en son sein le ventilateur (21) et l'échangeur de chaleur intérieur (20), dans lequel le boîtier (28) présente une sortie (28d) pour souffler de l'air, l'échangeur de chaleur intérieur (20) est prévu à l'intérieur de l'unité intérieure (2) de sorte à s'opposer au ventilateur (21), et l'échangeur de chaleur à rayonnement (22) est prévu sur une surface de l'unité intérieure (2) ;
l'unité extérieure (3) comprenant un compresseur (30), un échangeur de chaleur extérieur (32), et une structure de décompression (34),
dans lequel le climatiseur comprend un circuit de réfrigérant (10) présentant le compresseur (30), l'échangeur de chaleur intérieur (20), l'échangeur de chaleur à rayonnement (22), la structure de décompression (34), et l'échangeur de chaleur extérieur (32) ;
dans lequel le climatiseur est configuré pour être actionné dans un mode d'opération de chauffage pour réaliser une opération de chauffage intérieur,
le circuit de réfrigérant comprenant en outre :
un canal principal (11) dans lequel la structure de décompression (34), l'échangeur de chaleur extérieur (32), et le compresseur (30) sont prévus dans cet ordre depuis un côté amont vers un côté aval pendant l'opération de chauffage, le canal principal (11) s'étendant entre une section de bifurcation (11a) et une section de jonction (11b) ;
un premier canal (12) présentant l'échangeur de chaleur intérieur (20), qui est configuré pour raccorder la section de bifurcation (11a) sur le côté aval du compresseur (30) à la section de jonction (11b) prévue sur le côté amont de la structure de décompression (34), pendant l'opération de chauffage ; et
un second canal (13) présentant l'échangeur de chaleur à rayonnement (22), qui raccorde la section de bifurcation (11a) et la section de jonction (11b) en parallèle du premier canal (12) pendant l'opération de chauffage,
une structure à valve (23) configurée pour ajuster la quantité d'un réfrigérant à fournir à l'échangeur de chaleur à rayonnement (22) est prévue dans le circuit de réfrigérant (10) ; et
dans lequel le climatiseur comprend un dispositif de commande de valve (53), le dispositif de commande de valve étant configuré pour augmenter un degré d'ouverture de la structure à valve (23) après la diminution d'une fréquence du compresseur (30), lorsqu'un chauffage à air chaud est réalisé en amenant le réfrigérant à s'écouler dans l'échangeur de chaleur intérieur (20) et un chauffage à rayonnement est réalisé en amenant le réfrigérant à s'écouler dans l'échangeur de chaleur à rayonnement (22) de sorte qu'un débit du réfrigérant s'écoulant dans l'échangeur de chaleur à rayonnement (22) et dans l'échangeur de chaleur intérieur (20) soit ajusté.

2. Climatiseur selon la revendication 1,
dans lequel la structure à valve (23) est prévue entre l'échangeur de chaleur à rayonnement (22) et la section de jonction (11b) dans le second canal (13).

3. Climatiseur selon la revendication 1 ou 2, dans lequel le climatiseur est configuré pour commander la fréquence du compresseur (30) sur la base d'une différence de température entre une température cible intérieure et une température intérieure.

4. Climatiseur selon l'une quelconque des revendications 1 à 3, dans lequel le climatiseur est configuré pour commander le degré d'ouverture de la structure à valve (23) sur la base d'une température de l'échangeur de chaleur à rayonnement (22).

5. Climatiseur selon l'une quelconque des revendications 1 à 3, dans lequel le climatiseur est configuré pour commander le degré d'ouverture de la structure à valve (23) sur la base d'une température de l'échangeur de chaleur intérieur (20).

6. Climatiseur selon l'une quelconque des revendications 1 à 5, dans lequel la sortie (28d) est prévue au niveau d'une portion d'extrémité supérieure du boîtier (28).

7. Climatiseur selon l'une quelconque des revendications précédentes, le climatiseur étant configuré de sorte que la température de soufflage de la sortie (28d) diminue lorsqu'une fréquence du compresseur (30) est diminuée.
